(19) Europäisches Patentamt
European Patent Office
Office européen des brevets

(11) **EP 1 881 582 A2**

(12) **EUROPEAN PATENT APPLICATION**

(43) Date of publication:
**23.01.2008 Bulletin 2008/04**

(51) Int Cl.:
*H02K 1/27* (2006.01)    *H02K 21/00* (2006.01)

(21) Application number: **07013286.5**

(22) Date of filing: **06.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **19.07.2006 JP 2006196815**

(71) Applicant: **Fanuc Ltd
Minamitsuru-gun,
Yamanashi 401-0597 (JP)**

(72) Inventors:
• **Maeda, Takuya
Oshino-mura
Minamitsuru-gun
Yamanashi 401-0511 (JP)**
• **Yamamoto, Tomonaga
Yamanashi 403-0005 (JP)**
• **Uematsu, Hidetoshi
Oshino-mura
Minamitsuru-gun
Yamanashi 401-0511 (JP)**

(74) Representative: **Thum, Bernhard
Wuesthoff & Wuesthoff
Patent- und Rechtsanwälte
Schweigerstrasse 2
81541 München (DE)**

(54) **Permanent magnetic synchronous electrical motor**

(57)   A permanent magnetic synchronous electrical motor, in which the waveform of the induced voltage is more similar to the sine curve than the prior art, so as to reduce the torque ripple. The outer shape of a rotor core of the electrical motor is specified by using the reciprocal of the cosine function. In the invention, the range of an electrical angle of the rotor, in which the reciprocal of the cosine function is applied to the outer shape of the rotor core, is equal to or more than 160 degrees.

Fig.1

EP 1 881 582 A2

**Description**

RELATED APPLICATIONS

The present application claims priority from Japanese Patent Application No. 2006-196815, filed on July 19, 2006, the entire contents of which are fully incorporated herein by reference.

BACKGROUND OF THE INVENTION

1. Field of the Invention

The present invention relates to a permanent magnetic synchronous electrical motor, in particular, an electric motor including a rotor core having a shape, to which a reciprocal of a cosine function is applied.

2. Description of the Related Art

In a permanent magnetic synchronous electrical motor of the prior art, the shape of the rotor core of the motor is basically cylindrical, and has some projections or projecting polarized portions arranged on the outer periphery of the rotor core at equal spaces. In the motor having such a rotor core, torque ripple is relatively large due to the waveform turbulence of a back electromotive force. In recent years, when the waveform of the back electromotive force is a sine wave, theoretically, the torque ripple due to the back electromotive force is not generated. Further, it has also been understood that, in order to make the back electromotive force a sine wave, the gap between the inner surface of the stator and the outer surface of the rotor core in the motor should be represented by a reciprocal of a cosine function (i.e., B/cos(Cθ); wherein B and C are constant numbers). For Example, Japanese Unexamined Patent Publications (Kokai) Nos. 2001-346368 and 2002-165394 disclose a permanent magnetic synchronous electrical motor having a rotor core provided with projecting polarized portions, the gap is determined by using the reciprocal of the cosine function.

When the projecting polarized portions are arranged on the rotor core, the gap between the stator and the rotor at each polarized portion is small. Therefore, an efficient electric motor having a high magnetic force may be provided. However, in such an electric motor, the torque ripple may easily be large. Accordingly, in an electric motor disclosed in Japanese Unexamined Patent Publications (Kokai) No. 6-14509, for example, the rotor core has no projecting polarized portion and the reciprocal of the cosine function is applied to the shape of the rotor core, in order to reduce the torque ripple.

Fig. 4 shows a sectional view of the rotor core having no projecting polarized portion, as disclosed in Japanese Unexamined Patent Publications (Kokai) No. 6-14509. A permanent magnetic synchronous electrical motor 110 has a stator 112 having an armature winding (not shown), a rotor 114 spaced by the gap G from the stator 112, and rotatably about a rotation axis 116. In Fig. 4, the stator 112 is shown by roughly indicating only the inner surface thereof. The rotor 114 has a rotor core 118 connected to the rotation axis 116 and permanent magnets 120 fixed at equal spaces along the circumferential direction of the rotor core 118. The illustrated rotor core 118 is so-called an eight-pole type rotor core (or having four pairs of poles). In other words, eight permanent magnets are positioned 45 degrees from each other. When the rotor core 118 is connected to the rotation axis 116, first, an end plate (not shown) is arranged on each axial end of the laminated rotor core 118 and connected to the rotation axis 116, then, a rod 122, extending through the rotor core 118, is connected to the end plate.

As described above, the outer shape of the rotor core 118 is determined by using the reciprocal of the cosine function. However, as indicated by a circle "E" in Fig. 4, the rotor core 118 in the vicinity of the permanent magnet 120 is round-chamfered (for example, R=0.9mm). Therefore, in the vicinity of the permanent magnet, the shape of the rotor core does not correspond to the reciprocal of the cosine function. As a result, the difference between the waveform of the back electromotive force and the sine curve becomes larger, whereby the torque ripple cannot be effectively lowered.

SUMMARY OF THE INVENTION

Taking the significance of the shape of the rotor core in the vicinity of the permanent magnet into consideration, an object of the present invention is to provide a permanent magnetic synchronous electrical motor, in which the waveform of the induced voltage is more similar to the sine curve than the prior art, so as to reduce the torque ripple.

The present invention provides A permanent magnetic synchronous electrical motor, comprising: a stator; and a rotor having a rotor core and a plurality of permanent magnets arranged along the circumferential direction of the rotor core equally spaced, the outer shape of the rotor core being specified by using a reciprocal of a cosine function, wherein the range of an electrical angle of the rotor, in which the reciprocal of the cosine function is applied to the outer shape of the rotor core, is equal to or more than 160 degrees.

Preferably, the range of an electrical angle of the rotor, in which the reciprocal of the cosine function is applied to the outer shape of the rotor core, includes the angular position where a gap between the stator and the rotor is equal to or more than four times the minimum gap between the stator and the rotor.

Preferably, the relational expression below regarding coordinates R and θ of the outer periphery of the rotor is true, in a polar coordinate system in which the rotation center of the rotor corresponds to the origin, and the center of each magnetic pole of the rotor is set to zero degree:

R = A - B/cos (Cθ), wherein A, B and C are constant numbers.

Alternatively, the relational expression below regarding coordinates X and Y of the outer periphery of the rotor is true, in an orthogonal coordinate system in which the rotation center of the rotor corresponds to the origin, the center line of each magnetic pole of the rotor corresponds to an X-axis, and the other line perpendicular to the center line corresponds to a Y-axis:

X = A' - B'/cos(C'Y), wherein A', B' and C' are constant numbers.

BRIEF DESCRIPTION OF THE DRAWINGS

The above and other objects, features and advantages of the present invention will be made more apparent by the following description of the preferred embodiments thereof, with reference to the accompanying drawings, wherein:

Fig. 1 is a sectional view of a permanent magnetic synchronous electrical motor according to a first embodiment of the invention;
Fig. 2 is a graph indicating the torque ripple of the electrical motor of the invention, in comparison with the torque ripple of the prior art;
Fig. 3 is a sectional view of a rotor core of a permanent magnetic synchronous electrical motor according to a second embodiment of the invention;
Fig. 4 is a sectional view of a permanent magnetic synchronous electrical motor of the prior art.

DETAILED DESCRIPTION

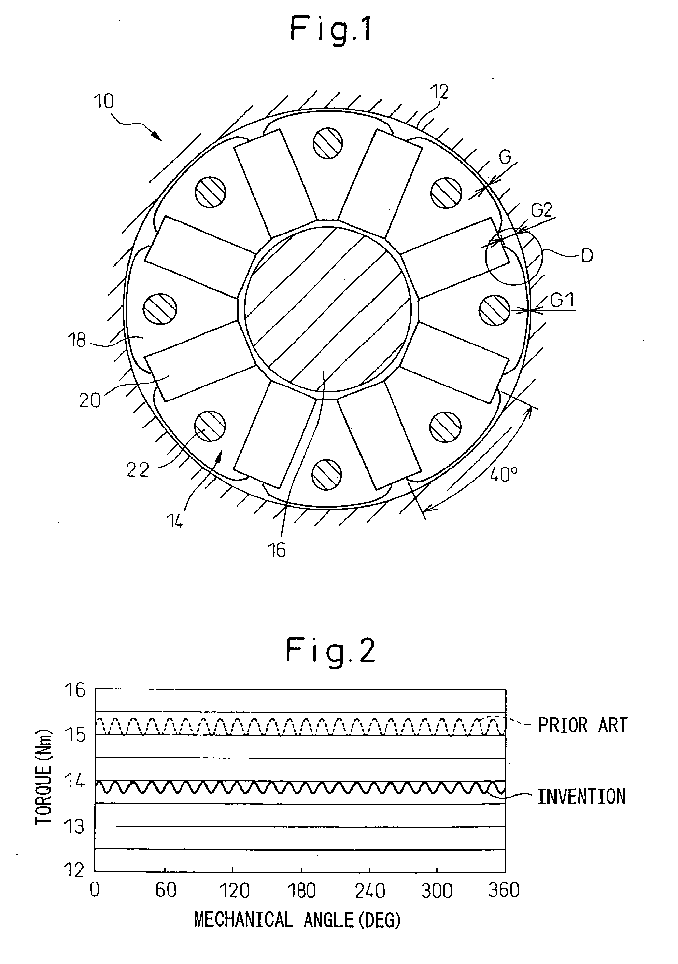

The invention will be described below with reference to the drawings. As shown in Fig. 1, a permanent magnetic synchronous electrical motor 10 according to a first embodiment of the invention has a stator 12 having an armature winding (not shown), and a rotor 14 spaced by a gap G from the stator 12, and rotatably about a rotation axis 16. In Fig. 1, the stator 12 is shown by roughly indicating only the inner surface thereof. The rotor 14 has a rotor core 18 connected to the rotation axis 16, and a plurality of permanent magnets 20 fixed at equal spaces along the circumferential direction of the rotor core 18. The illustrated rotor core 18 is a so-called eight-pole type rotor core (or having four pairs of poles). In other words, eight permanent magnets are positioned at 45 degrees from each other. When the rotor core 18 is connected to the rotation axis 16, first, an end plate (not shown) is arranged on each axial end of the laminated rotor core 18 and connected to the rotation axis 16, then, a rod 22, extending through the rotor core 18, is connected to the end plate. Such a configuration of these components may be similar to that of the prior art as shown in Fig. 4.

The outer shape of the rotor core 18 is specified by a reciprocal of a cosine function. In particular, the gap G in the radial direction, between the inner surface of the stator 12 and the outer surface of the rotor core 18, is represented by equation (1) as shown below. Further, the function R, in a polar coordinate system, representing the outer shape of the rotor core 18 may be calculated by equation (2). At this point, characters A, B and C are constant numbers.

$$G(\theta) = B/\cos(C\theta) \qquad\qquad (1)$$

$$R(\theta) = A - B/\cos(C\theta) \qquad\qquad (2)$$

The feature of the present invention is that the range, in which the outer shape of the rotor core according to the above equation (2), is wider than the prior art. Concretely, the range of the electrical angle of the rotor is equal to or more than 160 degrees. For example, in the eight-pole type rotor core 18 as shown in Fig. 1, the mechanical angle between each permanent magnet 20 is 45 degrees. In the invention, the range of the mechanical angle, in which the outer shape of the rotor core according to the above equation (2), is equal to or more than 40 degrees. In other words, the range of the electrical angle (or the mechanical angle multiplied the number of pairs of poles) in this case is equal to or more than 160 degrees. In the rotor core of the prior art as shown in Fig. 4, the range of the mechanical angle, in which the outer shape of the rotor core is according to the reciprocal of the cosine function, is approximately 34 degrees (i.e., the range of the electrical angle is approximately 136 degrees), in order to support each magnet. In the invention, on the other hand, the electrical angle is much larger than the prior art, whereby the waveform of induced voltage is more similar to the sine curve than the prior art.

In equation (2) above, the outer shape of the rotor core 18 is specified in the polar coordinate system. However, the outer shape may also be specified in an orthogonal coordinate system in which the center of rotation axis 16 corresponds to the origin, the center line of each magnetic pole of the rotor corresponds to an X-axis, and the other line perpendicular to the center line corresponds to a Y-axis. In this case, a function, representing the outer shape of the rotor core 18, is represented by equation (3) as shown below. At this point, characters A', B' and C' are constant numbers.

$$X = A' - B'/\cos(C'Y) \qquad (3)$$

In the conventional electrical motor as shown in Fig. 4, there is not much difference between the minimum gap G3 (or 1mm) and the maximum gap G4 (or 2mm) within the range, in which the outer shape of the rotor core 118 is specified by using the reciprocal of the cosine function. On the other hand, in the invention, the difference between the minimum gap G1 and the maximum gap G2 may be equal to 1mm and 2mm, respectively, within the range in which the outer shape of the rotor core 18 is specified by using the reciprocal of the cosine function. Since the density of magnetic flux between the stator and the rotor is inversely proportional to the magnitude of the gap G, the density of magnetic flux in the vicinity of each magnet 20 (i.e., in the area where the gap G is relatively large), in the invention, is significantly smaller than that of the prior art. It is impossible to apply the reciprocal of the cosine function to the outer shape of the rotor core throughout entire range of electrical angle, because the gap G becomes infinite where the electrical angle is equal to 180 degrees. Therefore, the turbulence of the waveform of the back electromotive force, which may cause the torque ripple, is necessarily generated in the vicinity of the permanent magnet. However, in the invention, the gap in the vicinity of the permanent magnet may be much larger than the other area (for example, four times the minimum gap), whereby the affect of the area, where the waveform of the back electromotive force does not correspond to the sine curve, may be greatly reduced. Accordingly, the invention may provide an electrical motor in which the torque ripple is sufficiently reduced.

Fig. 2 is a graph indicating the torque ripple (having twenty-four components in this case) of the electrical motor of the invention, in comparison with the prior art. Generally, the torque ripple is represented by equation (4). At this point, characters Nt, Nv, Ni and p are a harmonic order of or the mechanical angle, a harmonic order of the induced voltage, a harmonic order of the current and the number of pairs of poles, respectively.

$$Nt = (Nv \pm Ni) \times p \qquad (4)$$

For example, in the eight-pole type electrical motor (or having four pairs of poles) as shown in Figs. 1 and 4, a term of the fifth-order of the induced voltage (Nv=5) is significant. Therefore, when the current corresponds to the sine curve (Ni=1), the torque ripple is generated twenty-four times per revolution, according to equation (4).

As shown in Fig. 2, the torque ripple (or the amplitude of the waveform) in the conventional electrical motor is approximately 0.36Nm (peak-to-peak). On the other hand, the torque ripple in the electrical motor of the invention is approximately 0.24Nm (peak-to-peak). In other words, the torque ripple in the invention is reduced and improved. Further, although not shown, the cogging torque is also improved from 0.049Nm (peak-to-peak) to 0.031Nm (peak-to-peak). Therefore, it can be understood that the effectiveness of the invention is verified.

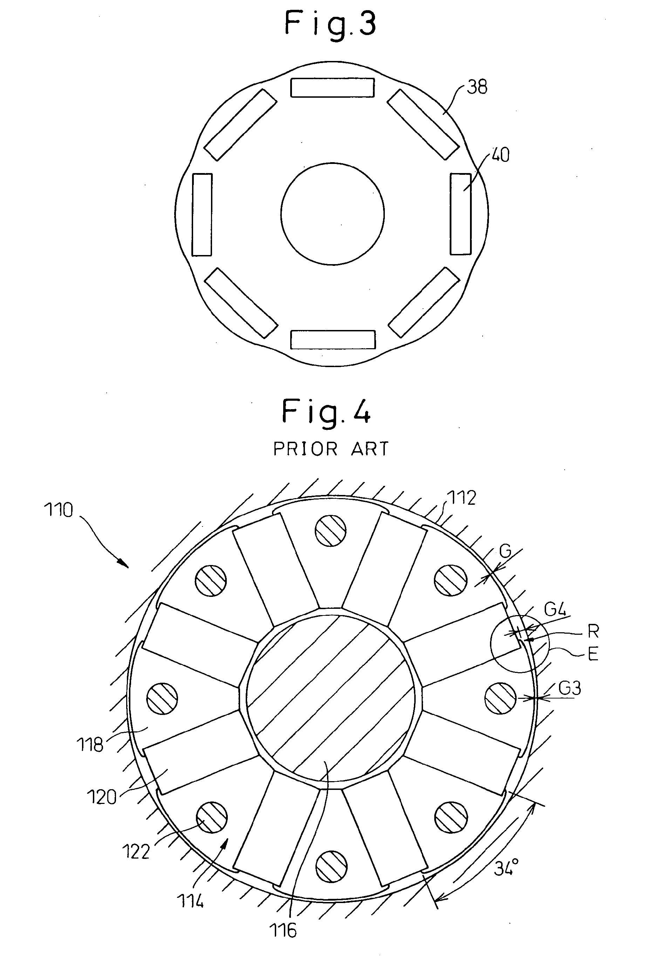

Fig. 3 is a rotor core 38 of a permanent magnetic synchronous electrical motor according to a second embodiment of the invention. In the first embodiment as shown in Fig. 1, the bar-like permanent magnets 20 are arranged in the radial direction. On the other hand, in the second embodiment, bar-like permanent magnets 40 are embedded in the rotor core 38 such that each permanent magnet extends along the tangential direction at each angular position of the rotor core. In such a configuration, the reciprocal of the cosine function may also be applied to the outer shape of the rotor core 38, such that the range of an electrical angle of the rotor is equal to or more than 160 degrees. In addition, other than the first and second embodiments, the invention may also be applied to another type of electrical motor, for example, in which permanent magnets are attached to the surface of a rotor core.

According to the permanent magnetic synchronous electrical motor of the present invention, the reciprocal of the cosine function may be applied to the outer shape of the rotor core such that the range of the electrical angle of the rotor is equal to or more than 160 degrees, whereby the waveform of the back electromotive force may be more similar to the sine-wave than the prior art. Therefore, the invention may provide an improved electrical motor in which the torque ripple is sufficiently reduced.

Further, according to the invention, the gap of the area, where the waveform of the back electromotive force does not correspond to the sine curve, may be equal to or more than four times the minimum gap. Therefore, the affect of the area, which may cause the turbulence of the waveform of the back electromotive force, may be significantly reduced.

While the invention has been described with reference to specific embodiments chosen for the purpose of illustration, it should be apparent that numerous modifications could be made thereto, by one skilled in the art, without departing from the basic concept and scope of the invention.

**Claims**

1. A permanent magnetic synchronous electrical motor (10), comprising: a stator (12); and a rotor (14) having a rotor core (18) and a plurality of permanent magnets (20) arranged along the circumferential direction of the rotor core (18) equally spaced, the outer shape of the rotor core (18) being specified by using a reciprocal of a cosine function, **characterized in that** the range of an electrical angle of the rotor (14), in which the reciprocal of the cosine function is applied to the outer shape of the rotor core (18), is equal to or more than 160 degrees.

2. The permanent magnetic synchronous electrical motor according to claim 1, **characterized in that** the range of an electrical angle of the rotor (14), in which the reciprocal of the cosine function is applied to the outer shape of the rotor core (18), includes the angular position where a gap (G) between the stator (12) and the rotor (14) is equal to or more than four times the minimum gap (G1) between the stator (12) and the rotor (14).

3. The permanent magnetic synchronous electrical motor according to claim 1 or 2, **characterized in that** the relational expression below regarding coordinates R and θ of the outer periphery of the rotor (14) is true, in a polar coordinate system in which the rotation center of the rotor (14) corresponds to the origin, and the center of each magnetic pole of the rotor is set to zero degree:

   $R = A - B/\cos(C\theta)$, wherein A, B and C are constant numbers.

4. The permanent magnetic synchronous electrical motor according to claim 1 or 2, **characterized in that** the relational expression below regarding coordinates X and Y of the outer periphery of the rotor (14) is true, in an orthogonal coordinate system in which the rotation center of the rotor (14) corresponds to the origin, the center line of each magnetic pole of the rotor (14) corresponds to an X-axis, and the other line perpendicular to the center line corresponds to a Y-axis:

   $X = A' - B'/\cos(C'Y)$, wherein A', B' and C' are constant numbers.

# Fig.1

# Fig.2

PRIOR ART

INVENTION

MECHANICAL ANGLE (DEG)

# Fig.3

38

40

# Fig.4

## PRIOR ART

110

112

G

G4

R
E

G3

118

120

122

114

116

34°

**EP 1 881 582 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006196815 A
- JP 2001346368 A

- JP 6014509 A